# EUROPEAN PATENT SPECIFICATION

(11) **EP 4 369 224 B1**
(45) Date of publication and mention of the grant of the patent: **17.12.2025**
(21) Application number: 22207256.3
(22) Date of filing: 14.11.2022
(51) Int. Cl.: G06F 21/32, H04L 9/40

(54) **A SECURE METHOD FOR ENABLING AN OPERATION**
SICHERES VERFAHREN ZUR ERMÖGLICHUNG EINES BETRIEBS
PROCÉDÉ SÉCURISÉ D'ACTIVATION D'UNE OPÉRATION

(43) Date of publication of application: 15.05.2024
(73) Proprietor: Valeo Comfort and Driving Assistance, 94000 Créteil (FR)
(72) Inventor: NAGARAJ, Prasannaraj, 94000 Créteil (FR); VENGADESWARAN, Silambarasan, 94000 Créteil (FR); PACHIAPPAN, Gopalakrishnan, 94000 Créteil (FR); MAHESHREDDY, Gunnam, 94000 Créteil (FR)
(74) Representative: Delplanque, Arnaud

(56) References cited:
- EP-A1- 2 192 511
- US-A1- 2018 285 539
- US-A1- 2021 144 008

## Description

The present invention relates to a secure method for enabling an operation. Such a method may be used, but not exclusively, in a banking domain.

In the banking domain, a secure method for enabling an operation, well-known by the man skilled in the art, comprises the use of a PIN (Personal Pin Number). In order to enabling an operation that is an authentication the banking application, a user of said banking application has to enter his/her PIN to authenticate and enter the banking application. The document US 2021/144008 relates to a biometric identification device used to secure passwords and other valuable information. Patent applications US 2018/285539 A1 and EP 2 192 511 A1 disclose methods for user authentication based on the user's fingerprints.

One problem of this prior art is that the PIN can be hacked.

It is an object of the invention to provide a secure method for enabling an operation, which resolves the problem above-stated. The invention is defined by the appended claims.

To this end, it is provided a secure method for enabling an operation related to a vehicle, wherein said secure method comprising:
- scanning one after the other by at least one fingerprint sensor device images of fingerprints, said scanned fingerprints' images composing an input pattern,
- comparing by a data processing apparatus said input pattern to a registered pattern of fingerprints' images set-up by a user and relative to said operation,
- if said input pattern is identical to said registered pattern, enabling by said data processing apparatus said operation, said comparison uses a mapping table associated to said registered pattern, said mapping table comprising sets of fingerprint's images of a left hand and of the right hand mapped with initial data, said initial data are digits 0 to 9, characterizing in that at least one digit from 0 to 9 within said mapping table is mapped with no image of fingerprint.

As we will see in further details, a sequence of fingerprints that are unique to a user will replaces the digits of the PIN, thus leading to a more secure way to enabling an operation.

According to non-limitative embodiments of the invention, the secure method in accordance with the invention further comprises the following characteristics.

In a non-limitative embodiment, said registered pattern has an associated mapping table which comprises sets of fingerprint's images of a left hand and of the right hand mapped with initial data.

In a non-limitative embodiment, said comparison uses a mapping table associated to said registered pattern, said mapping table comprising sets of fingerprint's images of a left hand and of the right hand mapped with initial data.

In a non-limitative embodiment, said fingerprint's images are raw images or encrypted images.

In a non-limitative embodiment, said initial data are digits 0 to 9.

In a non-limitative embodiment, different images of fingerprints within said mapping table are respectively mapped with different digits 0 to 9.

In a non-limitative embodiment, at least one image of a fingerprint within said mapping table is mapped with none of the digits 0 to 9.

In a non-limitative embodiment, at least one digit from 0 to 9 within said mapping table is mapped with no image of fingerprint.

In a non-limitative embodiment, at least two images of two different fingerprints within said mapping table are mapped with a same digit from 0 to 9.

In a non-limitative embodiment, at least one image of a fingerprint within said mapping table is mapped with at least two different digits from 0 to 9.

In a non-limitative embodiment, said operation is an authentication of an application.

In a non-limitative embodiment, said registered pattern corresponds to an authentication number.

In a non-limitative embodiment, the authentication number is a PIN or an OTP.

In a non-limitative embodiment, said operation is related to a vehicle.

In a non-limitative embodiment, said initial data are numbers 1 to N (N, an integer), each number corresponding to an operation.

In a non-limitative embodiment, each set of fingerprints' images comprises a pattern of at least two fingerprints' images.

In a non-limitative embodiment, said operation is a master mode, or a lock of the vehicle, or a lock of a vehicle opening, or a lock of the vehicle, or an unlock of a trunk's vehicle, or an unlock of a passenger vehicle opening, or a vehicle autopark, or a vehicle autodrive, or a secure alert mode.

In a non-limitative embodiment, the comparison happens by referring the fingerprints' images of the input pattern with the mapping table to verify if the input pattern matches a sequence of fingerprints' images of an operation.

There is also provided a secure system for enabling an operation related to a vehicle, wherein said secure system comprising :
- (a) at least one fingerprint sensor device configured to scan one after the other images of fingerprints, said scanned fingerprints' images composing an input pattern,
- (b) a data processing apparatus configured to :
- compare said input pattern to a registered pattern of fingerprints' images set-up by a user and relative to said operation, said comparison uses a mapping table associated to said registered pattern, said mapping table comprising sets of fingerprint's images of a left hand and of the right hand mapped with initial data, said initial data are digits 0 to 9, characterizing in that at least one digit from 0 to 9 within said mapping table is mapped with no image of fingerprint.
- if said input pattern is identical to said registered pattern, enable said operation.

In a non-limitative embodiment, the secure method further comprises :
- transmitting by said fingerprint sensor device to said data processing apparatus said input pattern,
- receiving by said data processing apparatus said input pattern from said at least fingerprint sensor device.

In a non-limitative embodiment, the mapping table is set-up before the scanning of the fingerprints' images.

In a non-limitative embodiment, the mapping table comprises a plurality of samples for a fingerprint.

In a non-limitative embodiment, said least one fingerprint sensor device is further configured to store said input pattern for future comparison. In non-limitative embodiments, said input pattern is stored either as raw images, or either as encrypted images.

In a non-limitative embodiment, the comparison is a comparison in the same order of appearance within said input pattern and within said registered pattern. In non-limitative embodiments, the comparison is performed image by image along the reception of each image of a fingerprint by the data processing apparatus, or is performed when the whole input sequence images of the fingerprints has been collected.

In a non-limitative embodiment, said secure system comprises only one fingerprint sensor device.

In a non-limitative embodiment, said fingerprint sensor device is a keypad with a plurality of scan sensors relative to each digit of the keypad.

In a non-limitative embodiment, said secure system comprises a plurality of fingerprint sensor devices.

In a non-limitative embodiment, for an application, the comparison comprises the recovering of each fingerprint image of each initial data of the registered pattern and comparing said image with each image of the input pattern in the order of appearance.

In a non-limitative embodiment, for a vehicle, the comparison happens by referring the input images of the input pattern with the mapping table to verify if the input pattern matches a sequence of images of an operation.

In a non-limitative embodiment, said comparison comprise :
- checking by the data processing apparatus the digits of said authentication number in the order they appeared within said authentication number,
- scanning by the data processing apparatus said mapping table in order to recover the fingerprint's images corresponding to said digits according to their order of appearance, said fingerprint's images in said order of appearance composing the registered pattern,
- comparing by the data processing apparatus said fingerprint's images of the registered pattern found in the mapping table with the fingerprints' images of the input pattern to said fingerprint's images of the registered pattern in the order of appearance.

In a non-limitative embodiment, master mode enables the unlock of the vehicle when the key or identifier to enter the vehicle is missed or forgotten.

In a non-limitative embodiment, said plurality of fingerprint sensor devices are distributed around a vehicle.

In a non-limitative embodiment, said fingerprint sensor devices are a scan sensors.

In a non-limitative embodiment, the secure system comprises a plurality of fingerprint sensor devices.

In a non-limitative embodiment, a fingerprint sensor device is positioned near an opening of a vehicle.

In a non-limitative embodiment, a fingerprint sensor device is positioned on a handle of said opening.

In a non-limitative embodiment, said at least one fingerprint sensor device is positioned outside said vehicle or inside said vehicle.

In a non-limitative embodiment, said mapping table is local or is centralized.

There is also provided a data processing apparatus for enabling an operation, said data processing apparatus being configured to:
- compare an input pattern to a registered pattern of fingerprints' images set-up by a user and relative to said operation, said input pattern being composed of fingerprints' images that have been scanned one after the other by at least one fingerprint sensor device,
- if said input pattern is identical to said registered pattern, enable said operation.

In a non-limitative embodiment, said data processing apparatus is further configured to receive said input pattern from said at least one fingerprint sensor device.

In a non-limitative embodiment, the data processing apparatus comprises:
- at least one non-transitory computer readable storage medium,
- instructions stored on the at least one non-transitory computer readable storage medium,
- at least one processor configured to execute said instructions to perform processes comprising:
- comparing an input pattern to a registered pattern of fingerprints' images set-up by a user and relative to an operation, said input pattern being composed of fingerprints' images that have been scanned one after the other by at least one fingerprint sensor device,
- if said input pattern is identical to said registered pattern, enabling said operation.

Some embodiments of methods and/or apparatus in accordance with embodiments of the present invention are now described, by way of example only, and with reference to the accompanying drawings, in which:
[Fig. 1] is a schematic diagram that illustrates a secure method for enabling an operation, according to a non-limitative embodiment of the invention,
[Fig. 2] is a schematic diagram of the secure method of Fig. 1, with additional sub-steps, according to a non-limitative embodiment,
[Fig. 3] illustrates a first mapping table of fingerprint's images on which is based a registered pattern that is used by the secure method of Fig. 2, each one of said fingerprint's images being mapped with a different digit from 0 to 9, some of said digits being used for an authentication number for enabling said operation, according to a non-limitative embodiment,
[Fig. 4] illustrates a second mapping table of fingerprint's images on which is based a registered pattern that is used by the secure method of Fig. 2, at least one of said fingerprint's images being mapped with none of the digits 0 to 9, some of said digits being used for an authentication number for enabling said operation, according to a non-limitative embodiment,
[Fig. 5] illustrates a third mapping table of fingerprint's images, on which is based a registered pattern that is used by the secure method of Fig. 2, at least one digit 0 to 9 within said mapping table being mapped with no image of a fingerprint, some of said digits being used for an authentication number for enabling said operation, according to a non-limitative embodiment,
[Fig. 6] illustrates a fourth mapping table of fingerprint's images, on which is based a registered pattern that is used by the secure method of Fig. 2, at least two fingerprint's images of two different fingerprints being mapped with a same digit from 0 to 9, some of said digits being used for an authentication number for enabling said operation, according to a non-limitative embodiment,
[Fig. 7] illustrates a fifth mapping table of fingerprint's images, on which is based a registered pattern that is used by the secure method of Fig. 2, at least one of said fingerprint's images being mapped with at least two different digits from 0 to 9, some of said digits being used for an authentication number for enabling said operation, according to a non-limitative embodiment,
[Fig. 8] illustrates different other mappings of fingerprints with digits from 0 to 9 on which is based a registered pattern that is used by the secure method of Fig. 2, according to non-limitative embodiments,
[Fig. 9] illustrates a sixth mapping table of fingerprint's images on which is based a registered pattern that is used by the secure method of Fig. 2, said fingerprint's images being mapped with features of a vehicle, according to a non-limitative embodiment,
[Fig. 10] is a schematic diagram of a secure system configured to perform the secure method of Fig. 1 and 2, said secure system comprising at least one fingerprint sensor device and a data processing apparatus, according to a non-limitative embodiment,
[Fig. 11] is a schematic diagram of a door of a vehicle with a handle that integrates a fingerprint sensor device of Fig. 10, according to a non-limitative embodiment,
[Fig. 12] illustrates a replacement of a prior art method for enabling an operation by the secure method of Fig. 1 and Fig. 2, according to a non-limitative embodiment.

In the following description, well-known functions or constructions by the man skilled in the art are not described in detail since they would obscure the invention in unnecessary detail.

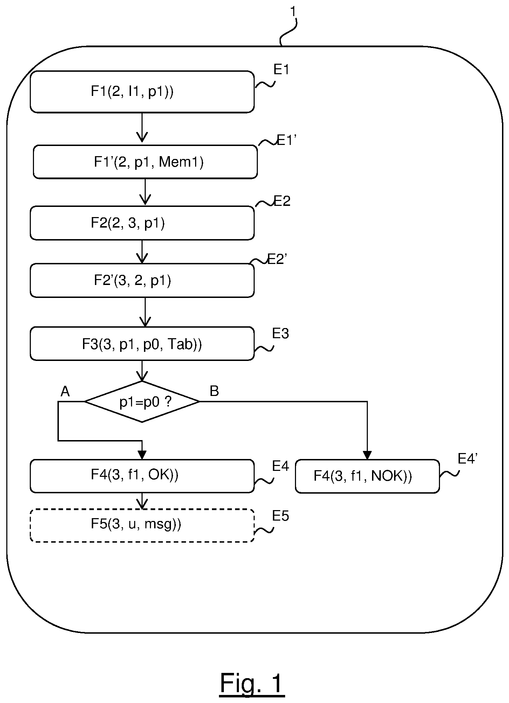

The present invention relates to a secure method 1 for enabling an operation f1, said secure method 1 being described in reference to FIG. 1 to 9, according to non-limitative embodiments.

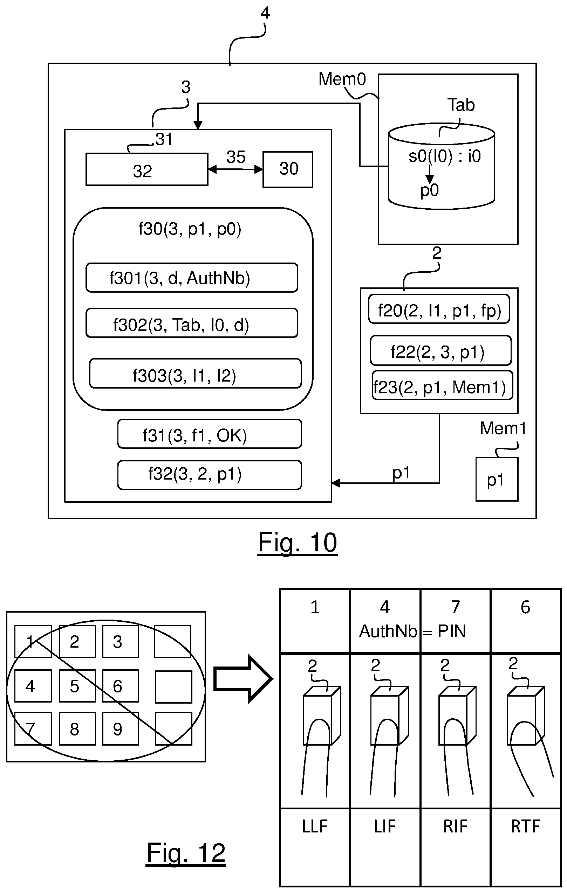

As will be described, the secure method 1 will use a mapping table Tab illustrated in Fig. 10. Said mapping table Tab comprises sets s0 of fingerprints' images I0 of a left hand and of a right hand of a user u that are mapped with initial data i0. Some of said fingerprints' images l0 will composed a registered pattern p0 described later on.

The mapping table Tab is set-up before the scanning of the fingerprints' images I1 described in the following. Beforehand, a user u enrolls all or part of the fingerprints fp of his left hand and of his right hand across initial data i0 via a human interface machine (not illustrated). In a non-limitative example, the human interface machine is configured to ask the user u to choose a fingerprint fp to be mapped with an initial data i0 and to put one of his fingerprint on a fingerprint sensor device 2 (illustrated in Fig. 10) so that it can be registered and mapped to said initial data i0, and asks him again for another initial data i0 and so on. The user u will put all or some of his/her finger fg onto the scanning sensor device 2 one after another. The images of the fingerprints fp are then stored within the mapping table Tab with the corresponding initial data i0. In a non-limitative embodiment, a plurality of samples of a same fingerprint fp is taken. Hence, the mapping table Tab comprises a plurality of samples for a fingerprint fp. It assures to have a precise definition of the fingerprint fp within said mapping table Tab. Indeed, the user u can position a finger fg on the fingerprint sensor device 2 in different manners. So, the different samples can reflect the variety of the positioning of a finger fg. In non-limitative embodiments, the fingerprints' images I0 stored in the mapping table Tab are stored either as raw images, or either as encrypted images to enhance the security.

The mapping table Tab is embodied on a storage memory Mem0 illustrated in Fig. 10, also called memory Mem0. In non-limitative embodiments, the storage memory Mem0 is an erasable programmable read-only memory EPROM or the like such as EEPROM, a Flash memory etc.

In a non-limitative embodiment, the mapping table Tab is local and/or is centralized. When the mapping table Tab is local, it means that it is stored within a local server of a service supplier. For example, it is stored within a local server of a bank, or of a delivery supplier. When it is centralized, it means that it is store on a centralized distant server of a central entity that controls a plurality of service suppliers. For example, it is stored within a centralized distant server of a central banking entity that controls a group of banks, and said banks can access the centralized distant server. For example, it is stored within a vehicle. In another example, when it is centralized, it is stored in a vehicle manufacturer distant server as well. In another embodiment, it can be both local and centralized. The centralized embodiment may be used with a personal device such as a mobile phone where the user enters his fingerprints fp.

The secure method 1 can be used to enable operations f1 related to an application App or to enable operations f1 related to a vehicle V.

**Hence,** in a first non-limitative embodiment, the operation f1 to be enabled is related to an application App. According to this first non-limitative embodiment, the following non-limitative embodiments are applied.

In the case of an application App, in a first non-limitative embodiment, only one fingerprint sensor device 2 is used. In a non-limitative variant of embodiment, the fingerprint sensor device 2 is a keypad with digits and with a plurality of scan sensors relative to each digit of the keypad. In this case, the user have to touch on the keypad with his/her fingers the different digits of the number corresponding to an authentication number AuthNb such as a PIN or OTP described in the following. In a second non-limitative embodiment, a plurality of fingerprint sensor devices 2 is used. In a non-limitative variant of embodiment, the fingerprint sensor devices 2 are a scan sensors.

In a non-limitative embodiment, each set s0 of fingerprint's images I0 within the mapping table Tab comprises only one image I0. In other words, a set s0 doesn't comprise a pattern (also called a sequence) of a plurality of fingerprint's images I0.

In non-limitative embodiments, the operation f1 is an authentication of an application App. The secure method 1 is therefore a secure authentication method for an application App. In non-limitative examples, the application App is a banking application, or a delivery application or a booking application. In a first non-limitative embodiment, said initial data i0 are digits 0 to 9. Hence, for the set-up of the mapping table Tab beforehand, the human interface machine will ask the user u to put a finger on the fingerprint sensor device 2 for digit 1, then for digit 2, then for digit 3, etc. until the last digit 9 and the images of each of the respective fingerprint fp thus put are saved in the memory Mem0.

In a non-limitative embodiment, the registered pattern p0 corresponds to an authentication number AuthNb for enabling said operation f1, that is to say here for enabling authentication of said application App. In non-limitative embodiments, the authentication number AuthNb is a PIN (Personal Identification Number) or an OTP ("One Time Password") or any other format protection. In a non-limitative embodiment, the authentication number AuthNb is composed of a plurality of digits from 0 to 9. In a non-limitative variant, the authentication number AuthNb is composed of four to six digits. For example, the PIN is a composed of four digits and the OTP is composed of six digits.

In the case of the PIN, the PIN is set-up beforehand by the user u of the application App via a human interface machine (not illustrated). In the case of the OTP, the OTP is set-up beforehand by the supplier of the application App. In non-limitative examples, the user u receives the OTP via a sms on his/her Smartphone or via an email. In these non-limitative examples, the registered pattern p0 corresponds to the PIN set-up beforehand by the user, or corresponds to the OTP receives beforehand by the user u. Hence, the registered pattern p0 comprises images I0 of fingerprints fp that correspond to each digit of the authentication number AuthNb (PIN or OTP here) and in the same order of the order of the digits d of said authentication number AuthNb. A digit is referenced d.

In a non-limitative examples, the PIN is used for a banking application, and the OTP is used for a delivery application or booking application, where the delivery application or booking application sends a new OTP for each new delivery or booking to the user u. The booking application can be a taxi booking application in a non-limitative example.

In the case of this first non-limitative embodiment of the operation f1, some different non-limitative embodiments of the mapping table Tab are presented hereinafter.

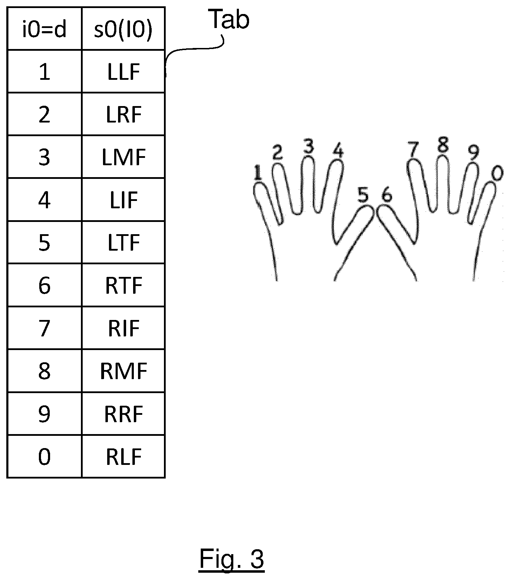

In a first non-limitative embodiment illustrated in Fig.3, different set s0 of images I0 of fingerprints fp within said mapping table Tab are respectively mapped with different digits 0 to 9, one set s0 comprising one image I0 here. Hence, in a non-limitative example of Fig. 3, one can see that :
- digit 1 is associated to the Left Little Finger, referenced LLF,
- digit 2 is associated to the Left Ring Finger, referenced LRF,
- digit 3 is associated to the Left Middle Finger, referenced LMF,
- digit 4 is associated to the Left Index Finger, referenced LIF,
- digit 5 is associated to the Left Thumb Finger, referenced LTF,
- digit 6 is associated to the Right Thumb Finger, referenced RTF,
- digit 7 is associated to the Right Index Finger, referenced RIF,
- digit 8 is associated to the Right Middle Finger, referenced RMF,
- digit 9 is associated to the Right Ring Finger, referenced RRF,
- digit 0 is associated to the Right Little Finger, referenced RLF.

Hence, if the PIN or the OTP is 1476, the associated registered pattern p0 is LLF-LIF-RIF-RTF that is to say Left Little Finger- Left Index Finger - Right Index Finger - Right Thumb Finger.

We can see the correspondence between the fingers fg (and thus the fingerprints fp) and the digits 0 to 9 on the right drawing in Fig. 3, where the left hand and the right hand are illustrated.

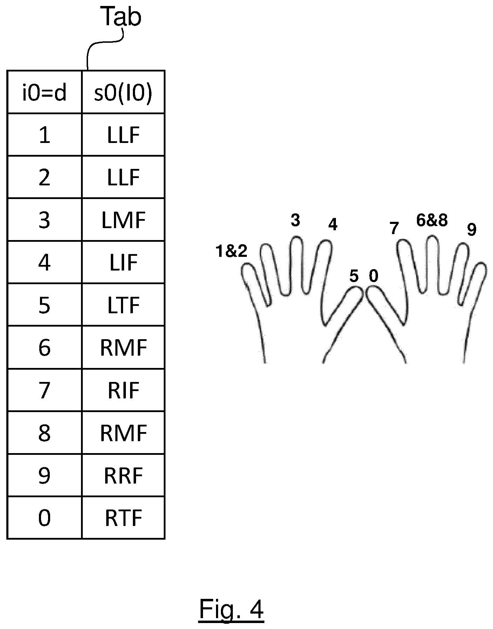

In a second non-limitative embodiment illustrated in Fig. 4, at least one image l0 of a fingerprint fp within said mapping table Tab is mapped with none of the digits 0 to 9. Hence, in a non-limitative example of Fig. 4, one can see that the LRF and the RLF have no associated digits d. It means that they can't be used for a registered pattern p0. We can see the correspondence between the fingers fg (and thus the fingerprints fp) and the digits 0 to 9 save the LRF and RLF on the right drawing in Fig. 4, where the left hand and the right hand are illustrated.

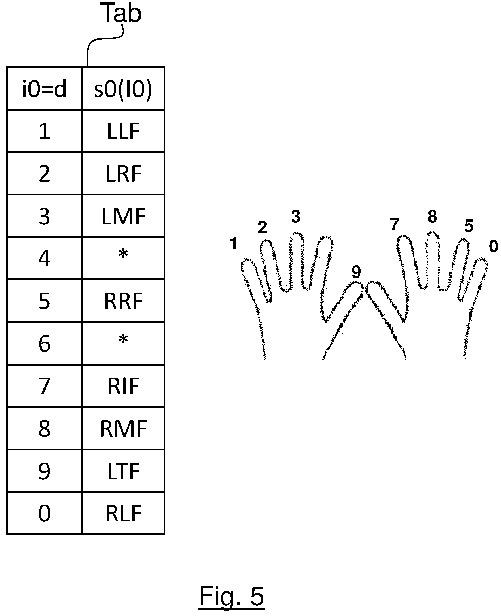

In a third non-limitative embodiment illustrated in Fig. 5, at least one digit d within said mapping table Tab is mapped with no image l0 of a fingerprint fp. In other words, at least one digit d has no corresponding mapping. Hence, in a non-limitative example of Fig. 5, one can see that digit 4 and digit 6 have no associated image I0 of a fingerprint fp. It means that they can't be used for an authentication number AuthNb. We can see the correspondence between the fingers fg (and thus the fingerprints fp) and the digits 0 to 9 save the digits 4 and 6 on the right drawing in Fig. 5, where the left hand and the right hand are illustrated.

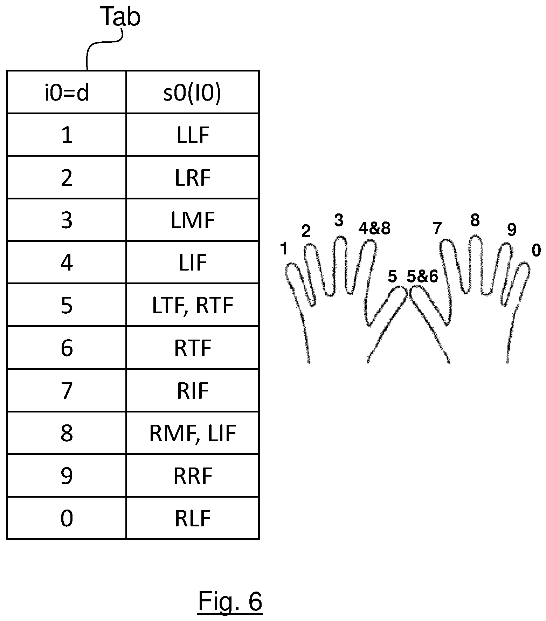

In a fourth non-limitative embodiment illustrated in Fig. 6, at least two images I0 of two different fingerprints fp within said mapping table Tab are mapped with a same digit 0 to 9. Hence, in a non-limitative example of Fig. 6, one can see that the LTF and the RTF are mapped with digit 5, and the RMF and the LIF are mapped with digit 8. It means that either of both fingers LTF, RTF can be used for digit 5, and either of both fingers RMF, LIF can be used for digit 8 for a registered pattern p0. We can see the correspondence between the fingers fg (and thus the fingerprints fp) and the digits 0 to 9 on the right drawing in Fig. 6, where the left hand and the right hand are illustrated.

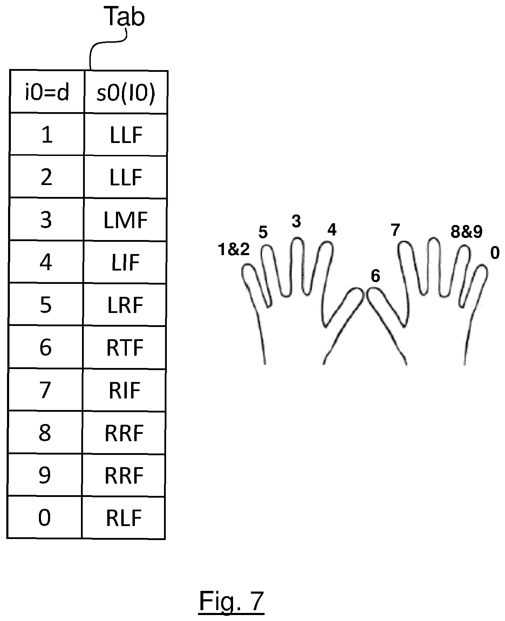

In a fifth non-limitative embodiment illustrated in Fig. 7, at least one image I0 of a fingerprint fp within said mapping table Tab is mapped with at least two different digits 0 to 9. Hence, in a non-limitative example of Fig. 7, one can see that the LLF is mapped with digit 1 and digit 2, and the RRF is mapped with digit 8 and digit 9. It means that the LLF can be used for digit 1 and digit 2, and the RMF can be used for digit 8 and digit 9 for a registered pattern p0. We can see the correspondence between the fingers fg (and thus the fingerprints fp) and the digits 0 to 9 on the right drawing in Fig. 7, where the left hand and the right hand are illustrated.

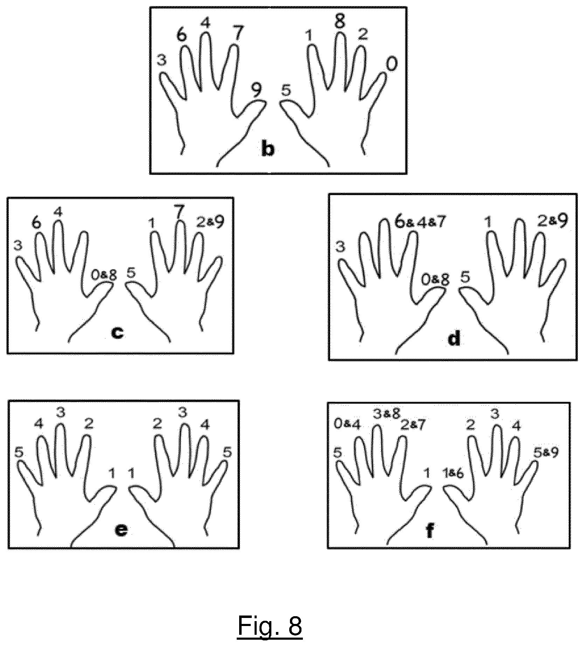

Of course, any combination of the second to fourth non-limitative embodiments can be performed. Fig. 8 illustrates different other mappings referenced b to f of left and right hands with digits from 0 to 9.

In a second non-limitative embodiment, the operation f1 to be enabled is related to a vehicle V. According to this second non-limitative embodiment, the following embodiments are applied. In the case of the vehicle V, an operation f1 is also called a feature f1.

In a non-limitative embodiment, each set s0 of fingerprints' images I0 within said mapping table Tab comprises a pattern of at least two fingerprints' images 10. Here, a set s0 doesn't comprise a pattern with only one fingerprint's image I0 because otherwise, it would untimely enable an operation f1, when the user u doesn't desire it. It is not enough secure to have only one fingerprint's image l0 within a set s0 to enable a feature f1. Having more than one fingerprint's image I0 permits to avoid the case where the user u mistakenly places one finger onto the door's handle V.210 of the vehicle V for example. The pattern with at least two fingerprints' images I0 permits to confirm the decision of the user u to enable a feature f1.

In a non-limitative embodiment, the registered pattern p0 corresponds to a set s0 of fingerprints' images I0 in the mapping table Tab that enables an operation f1.

In a non-limitative embodiment, said initial data i0 are digits 1 to N, each digit corresponding to an operation f1.

In non-limitative embodiments, the operation f1 is :
- a master mode f1.0, or
- a lock of the vehicle f1.1 (that is the lock of all the vehicle openings) or
- an unlock of the trunk vehicle f1.2, or
- an unlock of a passenger vehicle opening f1.3, or
- a vehicle autopark f1.4, or
- a vehicle autodrive f1.5, or
- a secure alert mode f1.6.

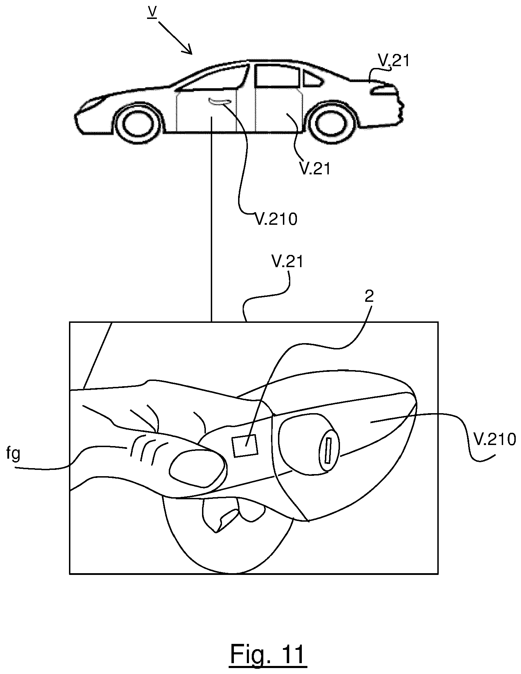

In non-limitative examples, the opening V.21 (illustrated in Fig. 11) of a vehicle V is the passenger's door, or the driver's door, or a back door, or the trunk or the tail gate.

In a non-limitative embodiment, the master mode f1.0 enables the unlock of the vehicle V when the key or identifier to enter the vehicle is missed or forgotten.

In a non-limitative embodiment, the vehicle autodrive f1.5 is the autonomous or semi-autonomous driving of the vehicle V to a location with the help of a Global Positioning System (GPS) or with the help of a recorded driving track. For example, the vehicle V has recorded a driving track and can go back to a start position with referring to the recorded driving track when the operation f1.5 is enabled.

In a non-limitative example, the secure alert mode f1.6 is :
- a secure alert information mode f1.6 to inform that a child is near the car or is seeking help/informing parent that child reached near car. In this case, the user u is the child and the registered pattern p0 is based on his/her fingerprints fp.

In the case of a vehicle V, in a non-limitative embodiment, a plurality of fingerprint sensor devices 2 are used. In a non-limitative embodiment, said fingerprint sensor devices 2 are scan sensors. In a non-limitative embodiment, they are distributed around the vehicle V. In a non-limitative embodiment, the fingerprint sensor devices 2 are positioned outside the vehicle V as illustrated in Fig. 11, or inside the vehicle V. In a non-limitative embodiment, a fingerprint sensor device 2 is associated to an opening V.21 of the vehicle V. In a non-limitative embodiment, there is one fingerprint sensor device 2 for each one of the openings V.21. In a non-limitative variant of embodiment, the fingerprint sensor device 2 associated to an opening V.21 is positioned within the opening's handle V.210 as illustrated on Fig. 11. Thus, it is easy for the user u to put his/her fingers fg onto the handle so that they can be scanned by the fingerprint sensor device 2 integrated into the handle V.210. In Fig. 11, the finger fg thumb is illustrated. The fingerprint sensor devices 2 replace a button onto a key or a vehicle identifier that usually permits the enabling of the operation f1 such as a door unlocking.

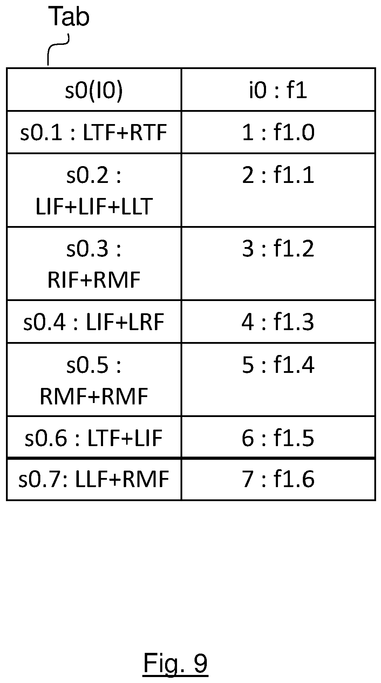

In a non-limitative sixth embodiment, the mapping table Tab is a following as illustrated in Fig. 9. As illustrated in Fig. 9, in a non-limitative embodiment, different set s0 of fingerprint's images 10 are respectively mapped with initial data i0 that are numbers from 1 to N, with N an integer, each number corresponding to a feature f1. In other words, difference sequences of fingerprints fp are mapped with a feature f1.

Hence, in a non-limitative example of Fig. 9, one can see that :
- the set s0.1 that comprises the pattern LFT plus RTF is mapped with the number 1 for an operation f1.0 that is the master mode. It means that to enable the master mode f1.0, the user u has to present the LFT then the RTF in this order,
- the set s0.2 that comprises the pattern LIF plus LIF plus LLT is mapped with the number 2 for the operation f1.1 that is the car lock. It means that to enable the locking of the car, the user u has to present the LIF, then again the LIF and at the end he LLT in this order,
- the set s0.3 that comprises the pattern RIF plus RMF is mapped with the number 3 for the operation f1.2 that is the trunk unlocking. It means that to enable the unlocking of the trunk, the user has to present the RIF then the RMF in this order,
- the set s0.4 that comprises the pattern RIF plus RMF is mapped with the number 4 for the operation f1.3 that is a passenger door unlocking. It means that to enable the unlocking of a passenger door, the user has to present the LIF then the LRF in this order,
- the set s0.5 that comprises the pattern RMF plus RMF is mapped with the number 5 operation f1.4 that is the vehicle autopark. It means that to enable the parking of the vehicle, the user u has to present twice the RMF,
- the set s0.6 that comprises the pattern LTF plus LIF is mapped with the number 6 for the operation f1.5 that is the autodrive for example. It means that to enable the vehicle to go to a GPS location for example, the user u has to present the LTF then the LIF in this order,
- the set s0.7 that comprises the pattern LLF plus RMF is mapped with the number 7 for the operation f1.6 that is the secure alert information mode. It means that to enable a child that he/she to inform his/her parents that he/she is near the car or is seeking help, the user u, here the child, has to present the LLF then the RMF in this order.

It is to be noted that not all the above-mentioned operations f1 has been illustrated in the mapping table Tab.

Of course, any other sequences of fingerprints fp can be used, either for the above-mentioned operations f1 or for any other operations f1.

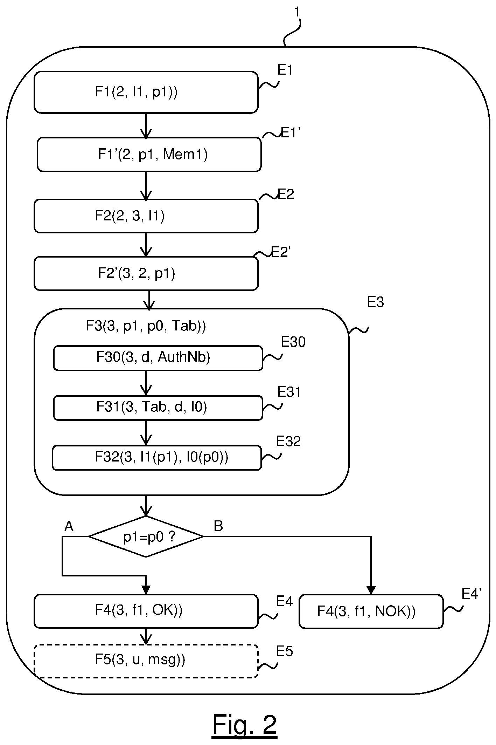

The secure method 1 is now described hereinafter in reference to Fig. 1 and 2.

When a user u wants to enter an application App, such as a banking application or a delivery application, the human interface machine of said application App will ask him/her to identified himself/herself in order to authenticate the application App. To this end, the user u puts his/her fingers fg onto the fingerprint sensor device 2, once at a time so as to present an input pattern p1 that should correspond to the authentication number AuthNb necessary to authenticate the application App, such as illustrated in a non-limitative example in Fig. 12. In the non-limitative embodiment illustrated in Fig. 12, the authentication number AuthNb is a PIN with the value 1476.

In the same manner, when a user u wants a feature f1 to be enabled onto a vehicle V such as the unlocking of a door, as illustrated in Fig. 11, he/she puts his/her fingers onto the fingerprint sensor device 2, once at a time, so as to present an input pattern p1 that should correspond to the pattern necessary to unlock the door. Said fingerprint sensor device 2 is integrated in the door's handle V.210 in the non-limitative example taken. In the non-limitative example, the feature f1 is the unlocking of the passenger door.

Thus, in step E1 illustrated F1(2, I1, p1) in Fig. 1 and 2, the fingerprint sensor device 2 scans one after the other the images 11 of fingerprints fp presented one after the other by the user u. The fingerprints fp are presented by the user u once at the time and their order of presentation composed the input pattern p1 of scanned fingerprints' images I1.

In a non-limitative embodiment, the fingerprint sensor device 2 sends a warning signal (such as in non-limitative examples an audible signal or a visual message) to the user u in order to tell him that he can put a next finger onto the fingerprint sensor device 2.

In step E1' illustrated F1'(2, p1, Mem1) in Fig. 1 and 2, the fingerprint sensor device 2 stores in a storage memory Mem1, also called memory Mem1 (illustrated in Fig. 10) the input pattern p1 of said fingerprints fp for the future comparison. In non-limitative embodiments, the storage memory Mem1 is an erasable programmable read-only memory EPROM or the like such as EEPROM, a Flash memory etc. In non-limitative embodiments, said input pattern p1 is stored either as raw images, or either as encrypted images to enhance the security.

Hence, in the case of the banking application or of the delivery application, the fingerprint sensor device 2 stores in a memory Mem1 (illustrated in Fig. 10) the input pattern p1 of said fingerprints fp for the future comparison described below. In the non-limitative example, the input pattern p1 is LLF-LIF-RIF-RTF.

Hence, in the case of the vehicle application, the fingerprint sensor device 2 stores in a memory Mem1 the input pattern p1 of said fingerprints fp for the future comparison described below. In the non-limitative example, the input pattern p1 is LIF-LRF.

In step E2 illustrated F2(2, 3, p1), the fingerprint sensor device 2 transmits the input pattern p1 to the data processing apparatus 3 which receives it (step E2' illustrated F2'(3, 2, p1). It is to be noted that :
- either the scan and the transmission are performed once and for all, that is to say the fingerprint sensor device 2 scans the whole images 11 of the fingerprints fp corresponding to the authentication number AuthNb or to the pattern necessary to unlock the door, and then transmit them to the data processing apparatus 3 for the comparison below,
- either the scan and the transmission are performed on the fly, it means, the fingerprint sensor device 2 scans the image 11 of one fingerprint fp and transmits it right away to the data processing apparatus 3 for the comparison below, then scans the image I1 of the next fingerprint fp and transmits it to the data processing apparatus 3 for the comparison below etc.

In step E3 illustrated F3(3, p1, p0, Tab), the data processing apparatus 3 compares the input pattern p1 to a registered pattern p0 of fingerprints' images I0 set-up by the user u and which is relative to the operation f1. The registered pattern p0 has an associated mapping table Tab described before. For the comparison, the data processing apparatus 3 uses the mapping table Tab (associated to the registered pattern p0) which comprises sets s0 of fingerprint's images I0 of a left hand and of the right hand mapped with initial data i0.

The comparison is a comparison in the same order of appearance within said input pattern p1 and within said registered pattern p0. Hence, the first fingerprints' image I1 of the input pattern p1 will be compared with the first fingerprints' images I0 of the registered pattern p0. The second fingerprints' image I1 of the input pattern p1 will be compared with the second fingerprints' images I0 of the registered pattern p0. The third fingerprints' image I1 of the input pattern p1 will be compared with the third fingerprints' images l0 of the registered pattern p0, and so on until the last fingerprints' image I1 of the input pattern p1 which will be compared with the last fingerprints' images I0 of the registered pattern p0. In non-limitative embodiments, the comparison is performed image by image along the reception of each image 11 of a fingerprint fp by the data processing apparatus 3, or is performed when the whole input sequence images I1 of the fingerprints fp has been collected.

Hence, in the case of the vehicle, the registered pattern p0 is the pattern that will enable the feature f1. Thus, the registered pattern p0 corresponds to the feature f1 to be enabled. For a vehicle, the comparison happens by referring the fingerprints' images 11 of the input pattern p1 with the mapping table Tab to verify if the input pattern p1 matches a sequence of fingerprints' images I0 of an operation f1.

Hence, in the case of the banking application or of the delivery application, the registered pattern p0 corresponds to the authentication number Auth that will permit the authentication of the application App. In the case of an application App, the comparison comprises the recovering of each fingerprint's image I0 of each initial data i0 of the registered pattern p0 and comparing said fingerprint's image I0 with each fingerprint's image 11 of the input pattern p1 in the order of appearance.

In a non-limitative embodiment illustrated in Fig. 2, the comparison comprises the following sub-steps :
- in a sub-step E30 illustrated F30(3, d, AuthNb), the data processing apparatus 3 checks the digits d of said authentication number AuthNb in the order they appeared within said authentication number AuthNb. In other words, it checks the sequence of the digits d. In the non-limitative taken example, the sequence is 1 then 4 then 7 then 6.
- in a sub-step E31 illustrated F31(3, Tab, d, I0), the data processing apparatus 3 scans the mapping table Tab in order to recover the fingerprint's images I0 corresponding to said digits d according to their order of appearance, said fingerprint's images l0 in said order of appearance composing the registered pattern p0. In the non-limitative taken example, the mapping table Tab of Fig. 3 is taken, and the registered pattern p0 is therefore LLF for 1, LIF for 4, RIF for 7 and RTF for 6.
- in a sub-step E32(3, I1(p1), I0(p0)), the data processing apparatus 3 compares said fingerprint's images I0 of the registered pattern p0 found in the mapping table Tab with the fingerprints' images I1 of the input pattern p1 in the order of appearance.

In step E4 illustrated F4(3, f1, OK) in Fig. 1 and 2, if the input pattern p1 is identical to the registered pattern p0 (branch A), the data processing apparatus 3 enables the operation f1. In the given example of the banking application, that is to say if :
- the image I0 of digit 1 found in the mapping table Tab is identical to the first image 11 of the input pattern p1,
- the image l0 of digit 4 found in the mapping table Tab is identical to the second image I1 of the input pattern p1,
- the image I0 of digit 7 found in the mapping table Tab is identical to the third image 11 of the input pattern p1,
- the image l0 of digit 6 found in the mapping table Tab is identical to the fourth image I1 of the input pattern p1,
then the operation f1 can be enabled.

In step E4' illustrated F4'(3, f1, NOK) in Fig. 1 and 2, if the input pattern p1 is different from the registered pattern p0 (branch B), the data processing apparatus 3 doesn't allow the operation f1.

In a non-limitative embodiment, in step E5 illustrated F5(3, u, msg), the data processing apparatus 3 sends a message msg to the user u via a human interface machine (not illustrated) in order to tell the user u if the enabling of the operation f1 is successful or not. In a non-limitative embodiment, the message msg is a visual message. As it is an embodiment, it is illustrated in broken lines. This step may be applied for the banking application or the delivery application.

Hence, in the case of the banking application or of the delivery application, as the input pattern p1 that is LLF-LIF-RIF-RTF is equal to the registered pattern p0 that is LLF-LIF-RIF-RTF that corresponds to the PIN/OTP which is 1476 (according to the non-limitative mapping table Tab of Fig. 3), the authentication of the banking application or of the delivery or booking application is successful. The user u can use the banking application, or open the delivery locker to retrieve his/her parcel or book a taxi. It is to be noted that the authentication of the delivery application comprises the unlocking of a delivery locker. Hence, as illustrated in Fig. 12, the secure method 1 allows the replacement of the input of a PIN/OTP by the input of fingerprints fp.

Hence, in the case of the vehicle V, as the input pattern p1 that is LIF-LRF is equal to the registered pattern p0 that is LIF-LRF (according to the non-limitative mapping table Tab of Fig. 9), the enabling of the opening of the passenger door is successful, as the operation f1 corresponding to the registered pattern p0 that is LIF-LRF is the opening of the passenger door. Hence, as illustrated in Fig. 11, the secure method 1 allows the replacement of the use of a key to unlock the passenger door by a sequence of fingerprints fp.

Hence, thanks to the secure method 1, one can authenticate in a secure manner an application App without using a classical authentication number AuthNb (PIN or OTP) or one can enable a feature f1 of a vehicle V in a secure manner without using a key or any other vehicle identifier.

Hence, the secure method 1 is implemented by a secure system 4 illustrated in Fig. 10. The secure system 4 comprises :
- (a) at least one fingerprint sensor device 2 configured to scan one after the other images I1 of fingerprints fp, said scanned fingerprints' images I1 composing an input pattern p1 (function f20 (2, 11, p1, fp) illustrated in Fig. 10),
- (b) a data processing apparatus 3 configured to :
- compare said input pattern p1 to a registered pattern p0 of fingerprints' images I0 set-up by a user u and relative to said operation f1 (function f30(3, p1, p0) illustrated in Fig. 10),
- if said input pattern p1 is identical to said registered pattern p0, enable said operation f1 (function f31(3, f1, OK) illustrated in Fig. 10).

In non-limitative embodiments, the secure system 4 can be a stand-alone apparatus (like a vending machine in a non-limitative example), a network integrated apparatus (like an ATM machine in a non-limitative example), or a personal device like a computer (such as a laptop in a non-limitative example) or a mobile phone, and handheld device (like a billing machine).

In a non-limitative embodiment, said least one fingerprint sensor device 2 is further configured to store said input pattern p1 in a memory Mem1 for future comparison (function f23(2, p1, Mem1) illustrated in Fig. 10).

In a non-limitative embodiment, said least one fingerprint sensor device 2 is further configured to transmit said input pattern p1 to said data processing apparatus 3 (function f22(2, 3, p1) illustrated in Fig. 10).

In a non-limitative embodiment, said data processing apparatus 3 is further configured to receive from said least one fingerprint sensor device 2 said input pattern p1 (function f32(3, 2, p1) illustrated in Fig. 10).

In a non-limitative embodiment, the data processing apparatus 3 is further configured to:
- check the digits of an authentication number AuthNb in the order they appeared within said authentication number AuthNb (sub-function f301(3, d, AuthNb) illustrated in Fig. 10),
- scan the mapping table Tab in order to find the fingerprint's images I0 corresponding to said digits according to their order of appearance, said fingerprint's images I0 in said order of appearance composing the registered pattern p0 (sub-function f302(3, Tab, I0, d) illustrated in Fig. 10),
- compare the fingerprints' images 11 of the input pattern p1 to said fingerprint's images l0 of the registered pattern p0 (sub-function f303(3, I1, 12) illustrated in Fig. 10).

The data processing apparatus 3 comprises:
- at least one non-transitory computer readable storage medium 31,
- instructions 32 stored on the at least one non-transitory computer readable storage medium 31,
- at least one processor 30 configured to execute said instructions 32 to perform processes comprising:
- comparing said input pattern p1 to a registered pattern p0 of fingerprints' images l0 set-up by a user u and relative to an operation f1, said input pattern p1 being composed of fingerprints' images 11 that have been scanned one after the other by said at least one fingerprint sensor device 2,
- if said input pattern p1 is identical to said registered pattern p0, enabling said operation f1.

It is to be noted that while only a single data processing apparatus 3 is illustrated in Fig. 10, the term "data processing apparatus" shall also be taken to include a collection of data processing apparatus 3 that individually or jointly execute the instructions 32.

Said at least one non-transitory computer readable storage medium 31 is a memory that is coupled to the said at least one processor 30 through a communication bus 35. The non-transitory computer readable storage medium 31 also referred to as non-transitory computer readable storage medium 31, a computer readable storage medium 31, or a computer readable storage device 31. The instructions 32 are also referred to as program instructions 32.

In non-limitative embodiments, the at least one processor 30 is a central processing unit (CPU), a graphics processing unit (GPU), a digital signal processor (DSP), an application specific integrated circuit (ASICs), a radio-frequency integrated circuits (RFICs), a reduced instruction set computing processor (RISC), a complex instruction set computing processor (CISC), or any suitable combination thereof.

In non-limitative embodiments, the instructions 32 also called program instructions 32, may be assembler instructions, instruction-set-architecture (ISA) instructions, machine instructions, microcode, firmware instructions, configuration data for integrated circuitry, or either source code, or object code written in any combination of one or more programming languages, including compiled of interpreted languages, such as procedural programming language or object-oriented programming language.

In non-limitative embodiments, the non-transitory computer readable storage medium 31 is an electronic storage device, a magnetic storage device, an optical storage device, an electromagnetic storage device, a semiconductor storage device, or any suitable combination of the foregoing. In non-limitative examples, the computer readable storage medium 31 is a read-only memory ROM or the like such as PROM, an erasable programmable read-only memory EPROM or the like such as EEPROM, a Flash memory, a solid-state memory, a DVD, and the like.

While the non-transitory computer readable storage medium 31 is shown as in a non-limitative embodiment to be a single medium, the term non-transitory computer readable storage medium should be taken to include a single medium or multiple media.

A computer readable storage medium 31 as used herein, is not to be construed as being a transitory signal per se, such as a radio wave, an electromagnetic wave propagating through a waveguide or other transmission media, or an electrical signal transmitted through a wire.

It is to be understood that the present invention is not limited to the aforementioned embodiments and variations and modifications may be made without departing from the scope of the invention. The invention is defined by the appended claims. In the respect, the following remarks are made. All statements herein reciting principles, aspects, and embodiments of the invention, as well as specific examples thereof, are intended to encompass equivalents thereof. Hence, in other non-limitative embodiments, the secure method can used for applications other than the banking application and the delivery application, such as a medical application or a government application or an email application. For the government application, in a non-limitative embodiment, the mapping table Tab can be stored within a distant server of the government. For the email application, the user u can access directly to his/her email using his/her fingerprints fp that will be the proof of his identity. There are no need to enter a user/password anymore. Hence, in another non-limitative embodiment, the secure method can be used for an ATM application. In this case, the fingerprints' images I0 correspond to a PIN related to a bank account of a user. Instead of using an ATM card to access a bank account or instead of using a Smartphone where an OTP is sent after selecting the option on the ATM machine to access the bank account, the user u just has to present his fingerprints corresponding to the PIN related to his/her bank account. The fingerprints' input pattern p1 will be compared with a registered pattern p0 stored for example within a bank distant server. There is no need to insert the ATM card and no need of the use of a Smartphone neither._Hence, in another non-limitative embodiment, the feature f1 of a vehicle V is an infotainment feature. In this case, the at least one fingerprint sensor device 2 is positioned inside the vehicle V and it can be a keypad.

Hence, some embodiments of the invention may comprise one or a plurality of the following advantages:
- it avoids using an authentication number AuthNb that can be hacked,
- it gives a secure way to proof the identity of a user u,
- in the case of the vehicle, when there is an emergency situation, one doesn't lose time to look for the key or for the car identifier,
- it is a simple solution as the authentication number AuthNb is replaced by a sequence of fingerprints fp, or the use of a key or of a car identifier is replaced by a sequence of fingerprints fp,
- when authenticating an application App that is installed on a Smartphone, it permits to use a fingerprint sensor device 2 that already exists on some Smartphone, thus reducing the cost,
- it avoids entering identification data such as a customer name and an email or a phone number, which can be tedious, as with the fingerprints, the user u is automatically recognized by the application App or by the vehicle V,
- it permits a user to identify himself/herself with his fingerprints in order to securely enable the operation f1, without any additional components such as a key, an identifier for a vehicle, or an identification card for a banking, delivery, social security, government applications, key fob etc.

## Claims

1. Secure method (1) for enabling an operation (f1) related to a vehicle (V), wherein said secure method (1) comprising :
- scanning one after the other by at least one fingerprint sensor device (2) images (I1) of fingerprints, said scanned fingerprints' images (I1) composing an input pattern (p1),
- comparing by a data processing apparatus (3) said input pattern (p1) to a registered pattern (p0) of fingerprints' images (I0) set-up by a user (u) and relative to said operation (f1),
- if said input pattern (p1) is identical to said registered pattern (p0), enabling by said data processing apparatus (3) said operation (f1), said comparison uses a mapping table (Tab) associated to said registered pattern (p0), said mapping table (Tab) comprising sets (s0) of fingerprint's images (I0) of a left hand and of the right hand mapped with initial data (i0), said initial data (i0) are digits 0 to 9, **characterizing in that** at least one digit (i0) from 0 to 9 within said mapping table (Tab) is mapped with no image (I0) of fingerprint (fp).

2. Secure method (1) according to claim 1, wherein different images (I0) of fingerprints (fp) within said mapping table (Tab) are respectively mapped with different digits 0 to 9.

3. Secure method (1) according to claim 1, wherein at least one image (I0) of a fingerprint (fp) within said mapping table (Tab) is mapped with none of the digits 0 to 9.

4. Secure method (1) according to any of claims 1 or 3, wherein at least two images (I0) of two different fingerprints (fp) within said mapping table (Tab) are mapped with a same digit (i0) from 0 to 9.

5. Secure method (1) according to any of claims 1, 3 or 4, wherein at least one image (I0) of a fingerprint (fp) within said mapping table (Tab) is mapped with at least two different digits (i0) from 0 to 9.

6. Secure method (1) according to any of the preceding claims, wherein said operation (f1) is an authentication of an application (App).

7. Secure method (1) according to any of the preceding claims, wherein said registered pattern (p0) corresponds to an authentication number (AuthNb).

8. Secure method (1) according to claim 1, wherein said initial data (i0) are numbers 1 to N (N, an integer), each number corresponding to an operation (f1).

9. Secure method (1) according to claim 1, or claim 8 combined with claim 1, wherein each set (s0) of fingerprints' images (I0) comprises a pattern of at least two fingerprints' images (I0).

10. Secure method (1) according to any of the preceding claims 1 to 9, wherein said operation (f1) is a master mode, or a lock of the vehicle, or an unlock of a trunk's vehicle, or an unlock of a passenger vehicle opening, or a vehicle autopark, or a vehicle autodrive, or a secure alert mode.

11. Secure system (4) for enabling an operation (f1) related to a vehicle (V), wherein said secure system (4) comprising :
- (a) at least one fingerprint sensor device (2) configured to scan one after the other images (I1) of fingerprints (fp), said scanned fingerprints' images (I1) composing an input pattern (p1),
- (b) a data processing apparatus (3) configured to :
- compare said input pattern (p1) to a registered pattern (p0) of fingerprints' images (I0) set-up by a user (u) and relative to said operation (f1) by using a mapping table (Tab) associated to said registered pattern (p0), said mapping table (Tab) comprising sets (s0) of fingerprint's images (I0) of a left hand and of the right hand mapped with initial data (i0), wherein said operation (f1) is related to a vehicle (V), said initial data (i0) are digits 0 to 9, **characterizing in that** at least one digit (i0) from 0 to 9 within said mapping table (Tab) is mapped with no image (I0) of fingerprint (fp),
- if said input pattern (p1) is identical to said registered pattern (p0), enable said operation (f1).

## Patentansprüche

1. Sicheres Verfahren (1) zum Ermöglichen eines Vorgangs (f1) in Bezug auf ein Fahrzeug (V), wobei das sichere Verfahren (1) umfasst:
- nacheinanderes Abtasten von Bildern (I1) von Fingerabdrücken durch mindestens eine Fingerabdrucksensorvorrichtung (2), wobei die abgetasteten Bilder (I1) der Fingerabdrücke ein Eingabemuster (p1) bilden,
- Vergleichen des Eingabemusters (p1) durch eine Datenverarbeitungsvorrichtung (3) mit einem registrierten Muster (p0) von Fingerabdruckbildern (I0), das von einem Benutzer (u) eingerichtet wurde und sich auf den Vorgang (f1) bezieht (f1) erstellt wurde,
- wenn das Eingabemuster (p1) mit dem gespeicherten Muster (p0) identisch ist, Freigabe des Vorgangs (f1) durch die Datenverarbeitungsvorrichtung (3), wobei der Vergleich eine dem gespeicherten Muster (p0) zugeordnete Zuordnungstabelle (Tab) verwendet, wobei die Zuordnungstabelle (Tab) Sätze (s0) von Fingerabdruckbildern (I0) der linken und der rechten Hand, die mit Anfangsdaten (i0) abgeglichen sind, wobei die Anfangsdaten (i0) Ziffern von 0 bis 9 sind, **dadurch gekennzeichnet, dass** mindestens eine Ziffer (i0) von 0 bis 9 innerhalb der Zuordnungstabelle (Tab) keiner Abbildung (I0) eines Fingerabdrucks (fp) zugeordnet ist.

2. Sicheres Verfahren (1) nach Anspruch 1, wobei verschiedene Bilder (I0) von Fingerabdrücken (fp) innerhalb der Zuordnungstabelle (Tab) jeweils verschiedenen Ziffern 0 bis 9 zugeordnet sind.

3. Sicheres Verfahren (1) nach Anspruch 1, wobei mindestens ein Bild (I0) eines Fingerabdrucks (fp) innerhalb der Zuordnungstabelle (Tab) keiner der Ziffern 0 bis 9 zugeordnet ist.

4. Sicheres Verfahren (1) nach einem der Ansprüche 1 oder 3, wobei mindestens zwei Bilder (I0) von zwei verschiedenen Fingerabdrücken (fp) innerhalb der Zuordnungstabelle (Tab) mit derselben Ziffer (i0) von 0 bis 9 zugeordnet werden.

5. Sicheres Verfahren (1) nach einem der Ansprüche 1, 3 oder 4, wobei mindestens ein Bild (I0) eines Fingerabdrucks (fp) innerhalb der Zuordnungstabelle (Tab) mindestens zwei verschiedenen Ziffern (i0) von 0 bis 9 zugeordnet ist.

6. Sicheres Verfahren (1) nach einem der vorstehenden Ansprüche, wobei der Vorgang (f1) eine Authentifizierung einer Anwendung (App) ist.

7. Sicheres Verfahren (1) nach einem der vorstehenden Ansprüche, wobei das registrierte Muster (p0) einer Authentifizierungsnummer (AuthNb) entspricht.

8. Sicheres Verfahren (1) nach Anspruch 1, wobei die Anfangsdaten (i0) Zahlen von 1 bis N (N, eine ganze Zahl) sind, wobei jede Zahl einem Vorgang (f1) entspricht.

9. Sicheres Verfahren (1) gemäß Anspruch 1 oder Anspruch 8 in Kombination mit Anspruch 1, wobei jeder Satz (s0) von Fingerabdruckbildern (I0) ein Muster aus mindestens zwei Fingerabdruckbildern (I0) umfasst.

10. Sicheres Verfahren (1) gemäß einem der vorstehenden Ansprüche 1 bis 9, wobei der Vorgang (f1) ein Vorgang in einem Mastermodus oder eine Verriegelung des Fahrzeugs oder eine Entriegelung eines Kofferraums des Fahrzeugs oder eine Entriegelung einer Fahrzeugtür oder ein automatisches Parken des Fahrzeugs oder ein automatisches Fahren des Fahrzeugs oder ein sicherer Alarmmodus ist, der in einem der vorstehenden Ansprüche 1 bis 9 beschrieben ist.

11. Sicherheitssystem (4) zum Ermöglichen eines Vorgangs (f1) in Bezug auf ein Fahrzeug (V), wobei das Sicherheitssystem (4) umfasst:
- (a) mindestens eine Fingerabdrucksensorvorrichtung (2), die so konfiguriert ist, dass sie nacheinander Bilder (I1) von Fingerabdrücken (fp) scannt, wobei die gescannten Fingerabdruckbilder (I1) ein Eingabemuster (p1) bilden,
- (b) eine Datenverarbeitungsvorrichtung (3), die so konfiguriert ist, dass sie:
- das Eingabemuster (p1) mit einem registrierten Muster (p0) von Fingerabdruckbildern (I0) zu vergleichen, das von einem Benutzer (u) eingerichtet wurde und sich auf den Vorgang bezieht (f1) unter Verwendung einer dem registrierten Muster (p0) zugeordneten Zuordnungstabelle (Tab) zu vergleichen, wobei die Zuordnungstabelle (Tab) Sätze (s0) von Fingerabdruckbildern (I0) der linken und der rechten Hand umfasst, die mit Anfangsdaten (i0) zugeordnet sind, wobei der Vorgang (f1) sich auf ein Fahrzeug (V) bezieht, die Anfangsdaten (i0) Ziffern von 0 bis 9 sind, **dadurch gekennzeichnet, dass** mindestens eine Ziffer (i0) von 0 bis 9 innerhalb der Zuordnungstabelle (Tab) keiner Abbildung (I0) eines Fingerabdrucks (fp) zugeordnet ist,
- wenn das Eingabemuster (p1) mit dem registrierten Muster (p0) identisch ist, den Vorgang (f1) aktivieren.

## Revendications

1. Procédé sécurisé (1) permettant d'effectuer une opération (f1) relative à un véhicule (V), ledit procédé sécurisé (1) comprenant :
- la numérisation successive, par au moins un dispositif capteur d'empreintes digitales (2), d'images (I1) d'empreintes digitales, lesdites images numérisées (I1) d'empreintes digitales constituant un motif d'entrée (p1),
- la comparaison par un appareil de traitement de données (3) dudit motif d'entrée (p1) avec un motif enregistré (p0) d'images d'empreintes digitales (I0) configuré par un utilisateur (u) et relatif à ladite opération (f1), l'
- si ledit motif d'entrée (p1) est identique audit motif enregistré (p0), l'activation par ledit appareil de traitement de données (3) de ladite opération (f1), ladite comparaison utilisant une table de correspondance (Tab) associée audit motif enregistré (p0), ladite table de correspondance (Tab) comprenant des ensembles (s0) d'images d'empreintes digitales (I0) d'une main gauche et d'une main droite mappées avec des données initiales (i0), lesdites données initiales (i0) étant des chiffres de 0 à 9, **caractérisé en ce qu'**au moins un chiffre (i0) de 0 à 9 dans ladite table de mappage (Tab) est mappé sans image (I0) d'empreinte digitale (fp).

2. Procédé sécurisé (1) selon la revendication 1, dans lequel différentes images (I0) d'empreintes digitales (fp) dans ladite table de correspondance (Tab) sont respectivement mappées avec différents chiffres de 0 à 9.

3. Procédé sécurisé (1) selon la revendication 1, dans lequel au moins une image (I0) d'une empreinte digitale (fp) dans ladite table de correspondance (Tab) est mappée sans aucun des chiffres 0 à 9.

4. Procédé sécurisé (1) selon l'une quelconque des revendications 1 ou 3, dans lequel au moins deux images (I0) de deux empreintes digitales différentes (fp) dans ladite table de correspondance (Tab) sont mappées avec un même chiffre (i0) compris entre 0 et 9.

5. Procédé sécurisé (1) selon l'une quelconque des revendications 1, 3 ou 4, dans lequel au moins une image (I0) d'une empreinte digitale (fp) dans ladite table de correspondance (Tab) est mise en correspondance avec au moins deux chiffres différents (i0) de 0 à 9.

6. Procédé sécurisé (1) selon l'une quelconque des revendications précédentes, dans lequel ladite opération (f1) est une authentification d'une application (App).

7. Procédé sécurisé (1) selon l'une quelconque des revendications précédentes, dans lequel ledit motif enregistré (p0) correspond à un numéro d'authentification (AuthNb).

8. Procédé sécurisé (1) selon la revendication 1, dans lequel lesdites données initiales (i0) sont des nombres 1 à N (N, un nombre entier), chaque nombre correspondant à une opération (f1).

9. Procédé sécurisé (1) selon la revendication 1, ou selon la revendication 8 combinée avec la revendication 1, dans lequel chaque ensemble (s0) d'images d'empreintes digitales (I0) comprend un motif d'au moins deux images d'empreintes digitales (I0).

10. Procédé sécurisé (1) selon l'une quelconque des revendications 1 à 9 précédentes, dans lequel ladite opération (f1) est l' d'un mode maître, ou un verrouillage du véhicule, ou un déverrouillage du coffre du véhicule, ou un déverrouillage d'une ouverture du véhicule côté passager, ou un stationnement automatique du véhicule, ou une conduite automatique du véhicule, ou l' d'un mode d'alerte sécurisé.

11. Système sécurisé (4) permettant une opération (f1) liée à un véhicule (V), dans lequel ledit système sécurisé (4) comprend :
- (a) au moins un dispositif de détection d'empreintes digitales (2) configuré pour scanner les unes après les autres des images (I1) d'empreintes digitales (fp), lesdites images scannées d'empreintes digitales (I1) composant un motif d'entrée (p1),
- (b) un appareil de traitement de données (3) configuré pour :
- comparer ledit motif d'entrée (p1) à un motif enregistré (p0) d'images d'empreintes digitales (I0) configuré par un utilisateur (u) et relatif à ladite opération (f1) à l'aide d'une table de correspondance (Tab) associée audit motif enregistré (p0), ladite table de correspondance (Tab) comprenant des ensembles (s0) d'images d'empreintes digitales (I0) d'une main gauche et d'une main droite mises en correspondance avec des données initiales (i0), dans laquelle ladite opération (f1) est liée à un véhicule (V), lesdites données initiales (i0) sont des chiffres de 0 à 9, **caractérisé en ce qu'**au moins un chiffre (i0) de 0 à 9 dans ladite table de correspondance (Tab) est mappé sans image (I0) d'empreinte digitale (fp),
- si ledit motif d'entrée (p1) est identique audit motif enregistré (p0), activer ladite opération (f1).
